# EUROPEAN PATENT APPLICATION

(11) **EP 4 184 645 A1**
(43) Date of publication of application: **24.05.2023**
(21) Application number: 21911308.1
(22) Date of filing: 03.12.2021
(51) Int. Cl.: H01M 10/0565, H01M 10/052

(54) **PRECURSOR COMPOSITION FOR PREPARING POLYMER ELECTROLYTE, AND POLYMER ELECTROLYTE AND SECONDARY BATTERY WHICH ARE PREPARED USING SAME**

(30) Priority: 23.12.2020 KR 20200182200; 02.12.2021 KR 20210170874
(71) Applicant: LG Energy Solution, Ltd., Seoul 07335 (KR)
(72) Inventor: SHIN, Won Kyung, Daejeon 34122 (KR); LEE, Chul Haeng, Daejeon 34122 (KR); AHN, Kyoung Ho, Daejeon 34122 (KR); PARK, Sol Ji, Daejeon 34122 (KR); HAN, Jun Hyeok, Daejeon 34122 (KR); JI, Su Hyeon, Daejeon 34122 (KR)
(74) Representative: Hoffmann Eitle
(86) International application number: PCT/KR2021/018221
(87) International publication number: WO 2022/139241

(57) **Abstract**

The present invention relates to a precursor composition for preparing a polymer electrolyte, and a polymer electrolyte and a secondary battery which are prepared by using the same. The precursor composition for preparing a polymer electrolyte of the present invention includes a lithium salt, a non-aqueous organic solvent, a polymerization initiator, an oligomer represented by the Formula 1, and a compound represented by the Formula 2, wherein the oligomer represented by the Formula 1 and the compound represented by the Formula 2 may be included in a weight ratio of 1:0.01 to 1:4.

## Description

### TECHNICAL FIELD

### Cross-reference to Related Applications

This application claims priority from Korean Patent Application Nos. 10-2020-0182200, filed on December 23, 2020, and 10-2021-0170874, filed on December 2, 2021, the disclosures of which are incorporated by reference herein.

### Technical Field

The present invention relates to a precursor composition for preparing a polymer electrolyte, and a polymer electrolyte and a secondary battery which are prepared by using the same.

### BACKGROUND ART

Recently, interests in energy storage technologies have been increasingly grown. In particular, while the application of the energy storage technologies is expanded to mobile phones, camcorders, notebook PCs, and even to electric vehicles, research and efforts for the development of the energy storage technologies have been gradually materialized.

Electrochemical devices have received most attention in the field of energy storage technologies, and there emerges an interest in rechargeable secondary batteries among these electrochemical devices. Particularly, lithium secondary batteries developed in the early 1990's are spotlighted among currently developed secondary batteries because of their high operating voltage and extremely high energy density.

In a lithium secondary battery, a liquid electrolyte, in which a salt is dissolved in a non-aqueous solvent, has been mainly used, but, since the liquid electrolyte is not only more likely to volatilize while the non-aqueous organic solvent, a main component of the liquid electrolyte, is decomposed during continuous charge and discharge, but also it is often combusted due to an increase in ambient temperature and temperature of the battery itself, there is a problem that stability is low and battery performance is degraded.

In order to improve this problem, an effort to develop a secondary battery using a polymer electrolyte with less risk of ignition has recently emerged.

However, since the polymer electrolyte has excellent electrochemical safety, it is advantageous in that it may not only maintain a thickness of the battery constantly, but it may also prepare a thin film type battery because adhesion between an electrode and the electrolyte is excellent due to inherent adhesion of a gel phase, and, in contrast, since lithium ions are not uniformly located in the polymer electrolyte while a separation phenomenon occurs due to different phases of a non-aqueous organic solvent and a polymer matrix in the electrolyte, another problem arises in which ion conductivity is reduced and output characteristics are degraded.

Thus, there is a need to develop a polymer electrolyte capable of improving the performance of the secondary battery by improving lithium ion transfer properties while ensuring high-temperature stability at the same time.

### DISCLOSURE OF THE INVENTION

### TECHNICAL PROBLEM

An aspect of the present invention provides a precursor composition for preparing a polymer electrolyte in which oxidizing potential and flame retardancy are improved and viscosity is reduced.

Another aspect of the present invention provides a polymer electrolyte which is prepared by using the precursor composition for preparing a polymer electrolyte.

Another aspect of the present invention provides a lithium secondary battery in which capacity characteristics are improved by including the polymer electrolyte.

### TECHNICAL SOLUTION

According to an aspect of the present invention, there is provided a precursor composition for preparing a polymer electrolyte which includes:
a lithium salt, a non-aqueous organic solvent, a polymerization initiator,
an oligomer represented by the Formula 1, and
a compound represented by the Formula 2,
wherein the oligomer represented by the Formula 1 and the compound represented by the Formula 2 are included in a weight ratio of 1:0.01 to 1:4:

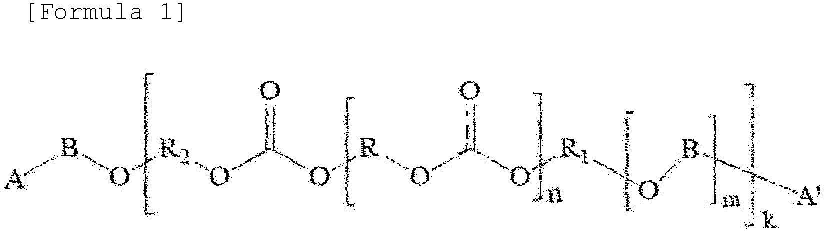

In the Formula 1,
R, R₁, and R₂ are each independently an alkylene group having 1 to 5 carbon atoms,
A and A' are each independently a unit containing one or more (meth)acrylate groups,
B is a unit containing at least one amide group, and
n, m, and k are the numbers of repeating units,
wherein n is an integer of 1 to 10,000,
m is an integer of 1 to 1,000, and
k is an integer of 1 to 100.

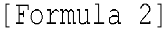

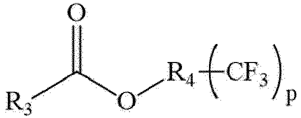

In the Formula 2,
R₃ is -CR₅=CH₂ (wherein, R₅ is hydrogen or an alkyl group having 1 to 3 carbon atoms) or -R₆-CF₃ (wherein, R₆ is an alkylene group having 1 to 20 carbon atoms which is substituted with at least one fluorine element),
R₄ is an alkylene group having 1 to 20 carbon atoms which is unsubstituted or substituted with at least one fluorine,
p is an integer of 0 or 1, and
when R₃ is -R₆-CF₃, p is 0, and R₄ is an alkyl group having 1 to 20 carbon atoms which is unsubstituted with fluorine.

According to another aspect of the present invention, there is provided a polymer electrolyte which is prepared by using the precursor composition for preparing a polymer electrolyte.

According to another aspect of the present invention, there is provided a lithium secondary battery including the polymer electrolyte.

### ADVANTAGEOUS EFFECTS

Since an oligomer represented by the Formula 1, which is included in a precursor composition for preparing a polymer electrolyte of the present invention, may reduce surface tension of the precursor composition for preparing a polymer electrolyte by including a polycarbonate group having excellent reactivity with a non-aqueous organic solvent as a main chain repeating unit, it may improve a moisture-retention property of the precursor composition for preparing a polymer electrolyte.

Also, since an ester-based compound represented by the Formula 2, which is included in the precursor composition for preparing a polymer electrolyte of the present invention, may improve a degree of agglomeration and a degree of crystallinity in polymer of a polymer matrix by including a substituent containing at least one fluorine element, it may reduce viscosity of the precursor composition for preparing a polymer electrolyte and simultaneously, may improve flame retardancy and oxidizing potential of the electrolyte.

Thus, if the precursor composition for preparing a polymer electrolyte of the present invention, which includes the oligomer represented by the Formula 1 and the compound represented by the Formula 2 together in a specific composition ratio, is used, a polymer electrolyte with improved oxidizing potential and flame retardancy and suppressed gas generation may be prepared by a synergistic effect of these compounds, and a lithium secondary battery with improved overall performance, such as safety and high-temperature output characteristics, may be achieved by using the same.

### MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

The terms used in the present specification are used to merely describe exemplary embodiments, but are not intended to limit the invention. The terms of a singular form may include plural forms unless referred to the contrary.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

Unless otherwise specified in the present invention, the expression "*" denotes the same or different atom or a portion connected between ends of a formula.

### [Precursor Composition for Preparing Polymer Electrolyte]

According to an embodiment, the present invention provides a precursor composition for preparing a polymer electrolyte which includes:
a lithium salt, a non-aqueous organic solvent, a polymerization initiator,
an oligomer represented by the Formula 1, and
a compound represented by the Formula 2,
wherein the oligomer represented by the Formula 1 and the compound represented by the Formula 2 are included in a weight ratio of 1:0.01 to 1:4.

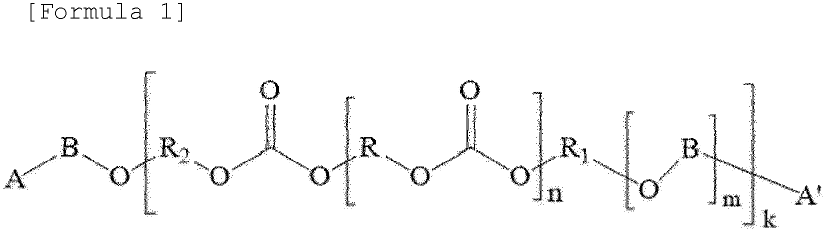

In the Formula 1,
R, R₁, and R₂ are each independently an alkylene group having 1 to 5 carbon atoms,
A and A' are each independently a unit containing one or more (meth)acrylate groups,
B is a unit containing at least one amide group, and
n, m, and k are the numbers of repeating units,
wherein n is an integer of 1 to 10,000,
m is an integer of 1 to 1,000, and
k is an integer of 1 to 100.

The amide group means a group represented by

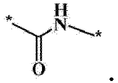

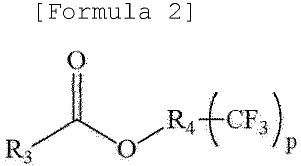

In the Formula 2,
R₃ is -CR₅=CH₂ (wherein, R₅ is hydrogen or an alkyl group having 1 to 3 carbon atoms) or -R₆-CF₃ (wherein, R₆ is an alkylene group having 1 to 20 carbon atoms which is substituted with at least one fluorine element),
R₄ is an alkylene group having 1 to 20 carbon atoms which is unsubstituted or substituted with at least one fluorine,
p is an integer of 0 or 1, and
when R₃ is -R₆-CF₃, p is 0, and R₄ is an alkyl group having 1 to 20 carbon atoms which is unsubstituted with fluorine.

### (1) Lithium Salt

Any lithium salt typically used in an electrolyte for a lithium secondary battery may be used as the lithium salt without limitation, and, for example, the lithium salt may include Li⁺ as a cation, and may include at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, and SCN⁻ as an anion.

Specifically, the lithium salt may include a single material selected from the group consisting of LiCl, LiBr, LiI, LiBF₄, LiClO₄, LiB₁₀Cl₁₀, LiAlCl₄, LiAlO₄, LiPF₆, LiCF₃SO₃, LiCH₃CO₂, LiCF₃CO₂, LiAsF₆, LiSbF₆, LiCH₃SO₃, LiN(SO₂F)₂ (lithium bis (fluorosulfonyl) imide, LiFSI), LiN(SO₂CF₂CF₃)₂ (lithium bis(perfluoroethanesulfonyl)imide, LiBETI), and LiN(SO₂CF₃)₂ (lithium bis(trifluoromethanesulfonyl)imide, LiTFSI) or a mixture of two or more thereof. In addition to them, a lithium salt typically used in an electrolyte of a lithium secondary battery may be used without limitation.

The lithium salt may be appropriately changed in a normally usable range, but may be included in a concentration of 0.8 M to 4.0 M, for example, 1.0 M to 3.0 M to obtain an optimum effect of forming a film for preventing corrosion of a surface of an electrode.

If the concentration of the lithium salt is less than 0.8 M, since mobility of lithium ions is reduced, an effect of improving low-temperature output and cycle characteristics during high-temperature storage is insignificant, and, if the concentration of the lithium salt is greater than 4.0 M, impregnability of the precursor composition for preparing a polymer electrolyte may be reduced due to an excessive increase in viscosity of the precursor composition for preparing a polymer electrolyte.

### (2) Non-aqueous Organic Solvent

Various non-aqueous organic solvents typically used in a lithium electrolyte may be used as the non-aqueous organic solvent without limitation. For example, the non-aqueous organic solvent may include a cyclic carbonate-based organic solvent, a linear carbonate-based organic solvent, or a mixed non-aqueous organic solvent thereof.

The cyclic carbonate-based organic solvent is a highly viscous non-aqueous organic solvent which may well dissociate the lithium salt in the electrolyte due to high permittivity, wherein specific examples of the cyclic carbonate-based organic solvent may be at least one non-aqueous organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and, among them, the cyclic carbonate-based organic solvent may include at least one of ethylene carbonate and propylene carbonate (PC).

Also, the linear carbonate-based organic solvent is a non-aqueous organic solvent having low viscosity and low permittivity, wherein typical examples of the linear carbonate-based organic solvent may be at least one non-aqueous organic solvent selected from the group consisting of dimethyl carbonate (DMC), diethyl carbonate (DEC), dipropyl carbonate, ethyl methyl carbonate (EMC), methylpropyl carbonate, and ethylpropyl carbonate, and the linear carbonate-based organic solvent may specifically include ethyl methyl carbonate (EMC).

The cyclic carbonate-based organic solvent and the linear carbonate-based organic solvent may be mixed and used as the non-aqueous organic solvent, and, in this case, the cyclic carbonate-based organic solvent and the linear carbonate-based organic solvent may be used in a volume ratio of 10:90 to 80:20, for example, 50:50 to 70:30.

Furthermore, in order to prepare an electrolyte having high ionic conductivity, the non-aqueous organic solvent may further include a linear ester-based organic solvent and/or a cyclic ester-based organic solvent with a low melting point and high stability at high temperatures in the cyclic carbonate-based organic solvent and/or the linear carbonate-based organic solvent.

As a representative example, the linear ester-based organic solvent may include at least one non-aqueous organic solvent selected from the group consisting of methyl acetate, ethyl acetate, propyl acetate, methyl propionate, ethyl propionate, propyl propionate, and butyl propionate, and may specifically include ethyl propionate and/or propyl propionate.

Also, the cyclic ester-based organic solvent may include at least one organic solvent selected from the group consisting of γ-butyrolactone, γ-valerolactone, γ-caprolactone, σ-valerolactone, and ε-caprolactone.

A remainder excluding the lithium salt, the oligomer represented by the Formula 1, and the compound represented by the Formula 2 in the precursor composition for preparing a polymer electrolyte of the present invention may all be the non-aqueous organic solvent unless otherwise stated.

### (3) Polymerization Initiator

Next, the polymerization initiator will be described.

The polymerization initiator is for initiating a polymerization reaction of the oligomer included in the precursor composition for preparing a polymer electrolyte of the present invention.

As the polymerization initiator, for example, organic peroxides or hydroperoxides, such as benzoyl peroxide, acetyl peroxide, dilauryl peroxide, di-tert-butyl peroxide, t-butyl peroxy-2-ethyl-hexanoate, cumyl hydroperoxide, and hydrogen peroxide, and azo compounds, such as 2,2'-azobis(2-cyanobutane), 2,2'-azobis(methylbutyronitrile), 2,2'-azobis(iso-butyronitrile) (AIBN), and 2,2'-azobisdimethylvaleronitrile (AMVN), may be used, but the polymerization initiator is not limited thereto.

The polymerization initiator is a material which may form a radical by being decomposed at room temperature (25°C to 30°C) or, for a non-limiting example, at a temperature of 30°C to 100°C, wherein the oligomer may react with an acrylate-based compound by a polymerization reaction by the radical to form a polymer electrolyte.

The polymerization initiator may be used in an amount of 0.01 part by weight to 5 parts by weight, preferably 0.05 part by weight to 5 parts by weight, and more preferably 0.1 part by weight to 5 parts by weight based on 100 parts by weight of the oligomer represented by the Formula 1. If the polymerization initiator is used within the above range, gelation during injection of the precursor composition for preparing a polymer electrolyte into the battery may be prevented, and an amount of the unreacted polymerization initiator, which may adversely affect battery performance, may be minimized. That is, in a case in which the polymerization initiator is included within the above range, the gelation may be performed properly.

### (4) Oligomer Represented by the Formula 1

Next, the oligomer represented by the Formula 1 will be described.

In general, a polymer electrolyte has disadvantages in that it has poorer safety and mechanical properties than a solid polymer electrolyte and has lower conductivity than a liquid electrolyte. Particularly, with respect to a polymer electrolyte using an oligomer as a sole additive, since it is not only not easy to control physical properties, but is also difficult to uniformly distribute a polymer in a battery, the polymer electrolyte is not suitable for being used in a high-capacity large battery. Thus, studies have recently been conducted to improve the mechanical properties or electrical conductivity of the polymer electrolyte by using a polymer matrix which is formed by polymerization of the oligomer. However, during the preparation of the polymer electrolyte, it is common to use a non-aqueous organic solvent together as a precursor composition, wherein, since a phase of the non-aqueous organic solvent is a liquid phase and a three-dimensional structured polymer matrix formed by bonding the oligomer is a solid phase, a phase separation phenomenon may occur due to a density difference between the polymer matrix and the non-aqueous organic solvent. If the separation phenomenon in the battery occurs, since lithium ions are non-uniformly located in the electrolyte, there is a problem in that electrical conductivity of the secondary battery is reduced.

Thus, in the present invention, an oligomer, which includes a unit having a functional group with properties similar to those of the non-aqueous organic solvent, was used to solve these problems.

That is, the oligomer of the present invention may improve reactivity between the polymer matrix formed by the oligomer and the non-aqueous organic solvent by including a polycarbonate group with properties similar to those of the non-aqueous organic solvent as a main chain repeating unit, and, accordingly, since lithium ions may be uniformly located in the electrolyte, electrical conductivity may be improved. Also, since the polycarbonate group constituting an oligomer main chain has a high affinity with a metal oxide, adhesion of the polymer electrolyte of the present invention, which is prepared from the oligomer represented by the Formula 1, with the electrode using the metal oxide is improved, and thus, cycle performance and stability of the battery may be further improved.

The oligomer of the present invention capable of achieving such an effect may include a compound represented by the Formula 1 below.

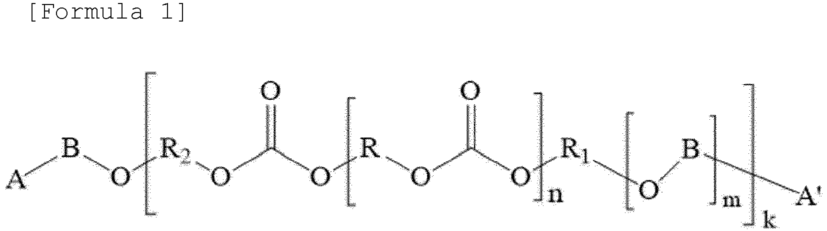

In the Formula 1,
R, R₁, and R₂ are each independently an alkylene group having 1 to 5 carbon atoms,
A and A' are each independently a unit containing one or more (meth)acrylate groups,
B is a unit containing at least one amide group, and
n, m, and k are the numbers of repeating units,
wherein n is an integer of 1 to 10,000,
m is an integer of 1 to 1,000, and
k is an integer of 1 to 100.

The amide group means a group represented by

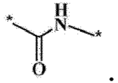

In the Formula 1, the units A and A' may each independently include at least one (meth)acrylate group among units represented by the following Formulae A-1 to A-6. Specifically, in order to improve the mechanical properties of the polymer electrolyte, it is more desirable that the units A and A' include at least one selected from the units represented by A-3 to A-6 below which may perform crosslinking more smoothly.

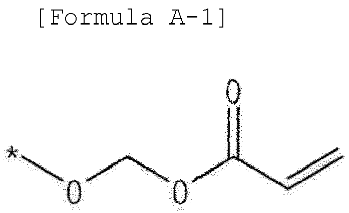

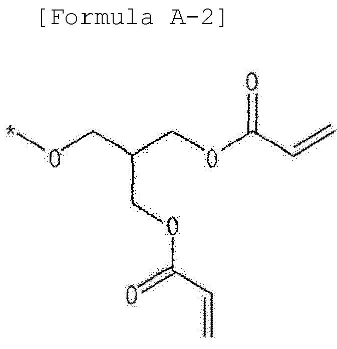

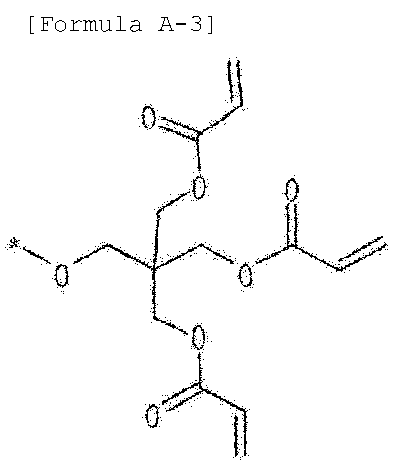

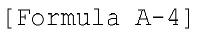

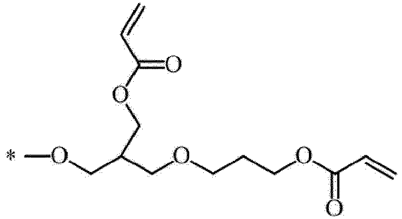

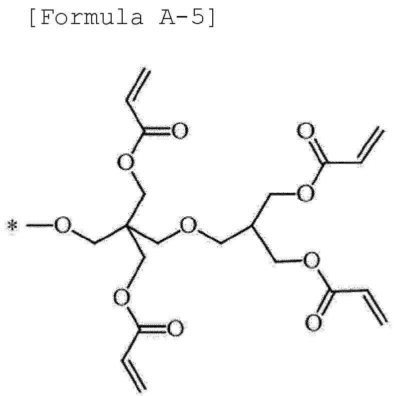

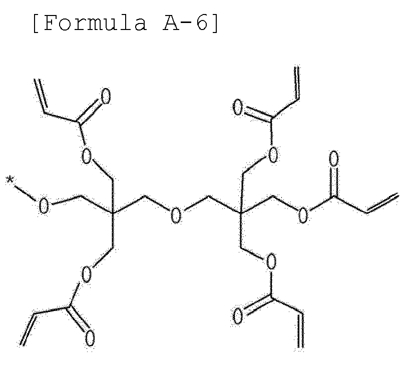

Also, in the oligomer represented by the Formula 1 of the present invention, the unit B including at least one amide group is a functional group which controls ion transport properties of the polymer electrolyte and gives ability to control mechanical properties and adhesion, wherein the unit B may include a unit represented by the Formula B-1 below.

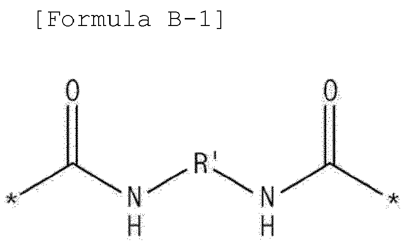

In the Formula B-1,
R' is an unsubstituted or substituted alkylene group having 1 to 10 carbon atoms, an unsubstituted or substituted cycloalkylene group having 3 to 10 carbon atoms, an unsubstituted or substituted bicycloalkylene group having 6 to 20 carbon atoms, or an unsubstituted or substituted arylene group having 6 to 20 carbon atoms.

Specifically, R' may include at least one selected from units represented by the Formulae R'-1 to R'-6 below.

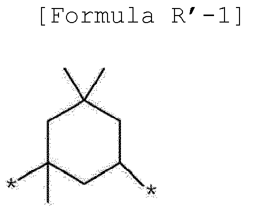

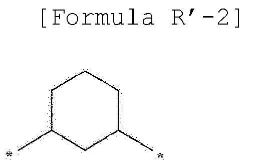

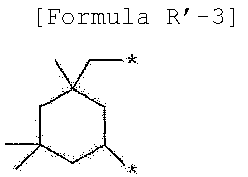

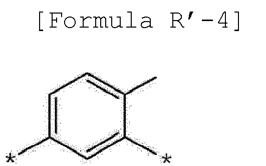

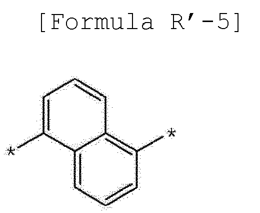

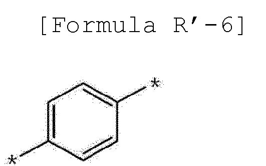

Also, in the Formula 1, n may preferably be an integer of 5 to 5,000, for example, 5 to 1,000. In a case in which n is within the above range, a level of viscosity, at which wetting may be smoothly performed, may be secured, and electrochemical stability may be increased.

Specifically, the oligomer represented by the Formula 1 of the present invention may include an oligomer represented by the Formula 1A below.

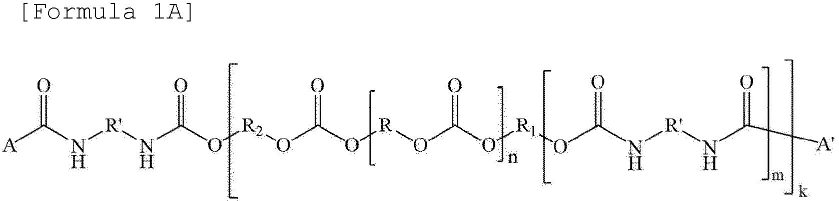

In the Formula 1A,
R, R₁, and R₂ are each independently an alkylene group having 1 to 5 carbon atoms,
R' is an unsubstituted or substituted alkylene group having 1 to 10 carbon atoms, an unsubstituted or substituted cycloalkylene group having 3 to 10 carbon atoms, an unsubstituted or substituted bicycloalkylene group having 6 to 20 carbon atoms, or an unsubstituted or substituted arylene group having 6 to 20 carbon atoms,
A and A' are each independently a unit containing one or more (meth)acrylate groups, and
n, m, and k are the numbers of repeating units,
wherein n is an integer of 1 to 10,000,
m is an integer of 1 to 1,000, and
k is an integer of 1 to 100.

More specifically, the oligomer represented by the Formula 1 may be a compound represented by the Formula 1A-1 below.

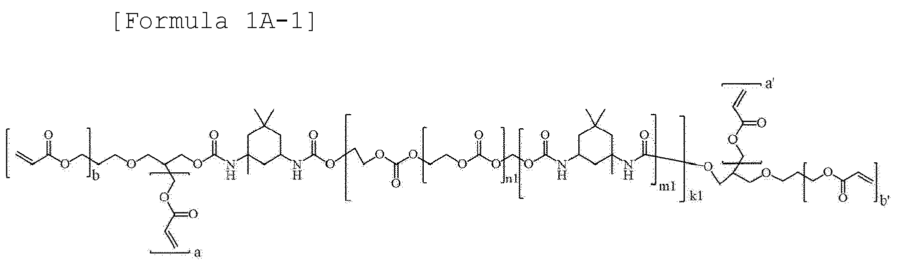

In the Formula 1A-1,
n1, m1, and k1 are the numbers of repeating units,
wherein n1 is an integer of 1 to 10,000,
m1 is an integer of 1 to 1,000, and
k1 is an integer of 1 to 100,
a and a' are each independently an integer of 1 or 2, and
b and b' are each independently an integer of 1 to 3.

More specifically, the oligomer represented by the Formula 1 may be a compound represented by the Formula 1A-2 below.

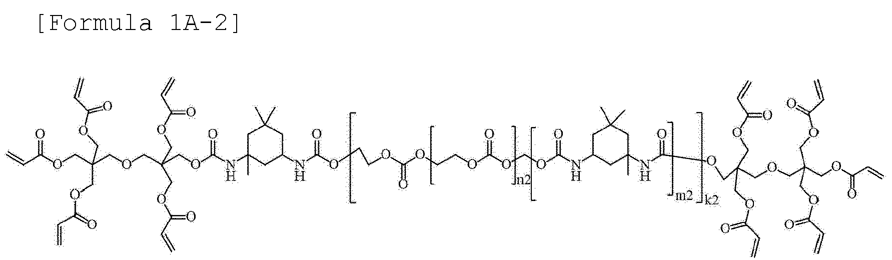

In the Formula 1A-2,
n2, m2, and k2 are the numbers of repeating units,
wherein n2 is an integer of 1 to 10,000,
m2 is an integer of 1 to 1,000, and
k2 is an integer of 1 to 100.

As described above, since the oligomer of the present invention improves the reactivity with the non-aqueous organic solvent by including the polycarbonate group as the main chain repeating unit, it may improve ionic conductivity of the electrolyte. Also, since the polycarbonate group has a high affinity with the metal oxide to improve the adhesion between the electrode using the metal oxide and the electrolyte, battery stability may be improved. However, since the polycarbonate group has relatively low reactivity with a graphite-based compound, adhesion to an electrode using graphite as a material of the electrode may be somewhat reduced. Thus, the adhesion between the electrolyte including the oligomer and the electrode may be adjusted to a certain level or higher by including an amide group (urethane group) having high reactivity with graphite together in the oligomer.

The oligomer may be included in an amount of 0.1 wt% to 30 wt%, particularly 0.1 wt% to 25 wt%, and preferably 0.1 wt% to 15 wt% based on a total weight of the precursor composition for preparing a polymer electrolyte. In a case in which the amount of the oligomer satisfies the above range, viscosity, strength, and ionic conductivity, which are above a predetermined level for application to the battery, may be secured.

Also, according to an embodiment of the present invention, a weight-average molecular weight (Mw) of the oligomer represented by the Formula 1 may be controlled by the number of repeating units, and may be in a range of about 1,000 g/mol to about 1,500,000 g/mol, particularly 2,000 g/mol to 1,200,000 g/mol, and more particularly 2,000 g/mol to 1,000,000 g/mol. In a case in which the weight-average molecular weight of the oligomer is within the above range, mechanical strength of the battery including the same may be effectively improved. In this case, the weight-average molecular weight in the present specification may denote a standard polystyrene-equivalent value measured by gel permeation chromatography (GPC), and, unless otherwise specified, a molecular weight may denote the weight-average molecular weight. For example, in the present invention, the weight-average molecular weight is measured by using 1200 series by Agilent Technologies, a PL mixed B column by Agilent Technologies may be used in this case, and tetrahydrofuran (THF) may be used as a solvent.

### (5) Compound Represented by the Formula 2

In order to reduce the viscosity of the precursor composition for preparing a polymer electrolyte by improving a degree of agglomeration and a degree of crystallinity in polymer of a polymer matrix and simultaneously improve flame retardancy and oxidizing potential of the electrolyte, the precursor composition for preparing a polymer electrolyte according to the present invention may additionally further include a compound as an additive in addition to the oligomer represented by the Formula 1.

The compound is a monomer having low resistance in which at least one fluorine element is substituted, wherein it may be a compound represented by the Formula 2 below.

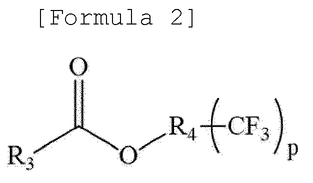

In the Formula 2,
R₃ is -CR₅=CH₂ (wherein, R₅ is hydrogen or an alkyl group having 1 to 3 carbon atoms) or -R₆-CF₃ (wherein, R₆ is an alkylene group having 1 to 20 carbon atoms which is substituted with at least one fluorine element),
R₄ is an alkylene group having 1 to 20 carbon atoms which is unsubstituted or substituted with at least one fluorine,
p is an integer of 0 or 1, and
when R₃ is -R₆-CF₃, p is 0, and R₄ is an alkyl group having 1 to 20 carbon atoms which is unsubstituted with fluorine.

Specifically, R₃ is -CR₅=CH₂ (wherein, R₅ is hydrogen or an alkyl group having 1 to 3 carbon atoms) or -R₆-CF₃ (wherein, R₆ is an alkylene group having 1 to 10 carbon atoms which is substituted with at least one fluorine element), R₄ is an alkylene group having 1 to 10 carbon atoms which is unsubstituted or substituted with at least one fluorine, p is an integer of 0 or 1, and, when R₃ is -R₆-CF₃, p is 0, and R₄ may be an alkyl group having 1 to 10 carbon atoms which is unsubstituted with fluorine.

More specifically, the compound represented by the Formula 2 may include at least one compound selected from the group consisting of compounds represented by the Formulae 2-1 to 2-8 below.

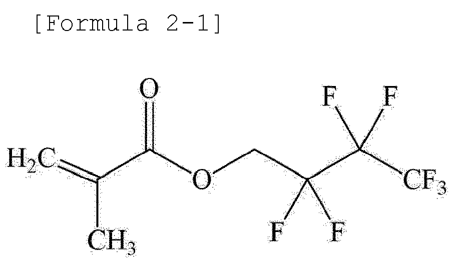

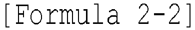

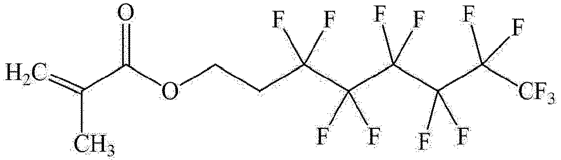

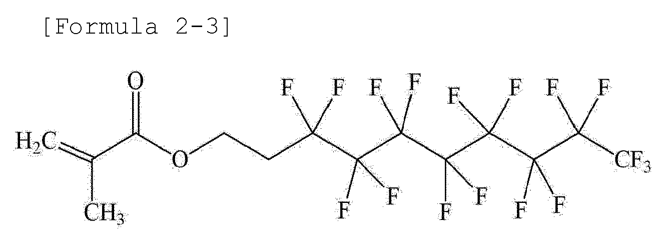

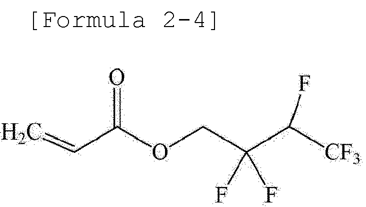

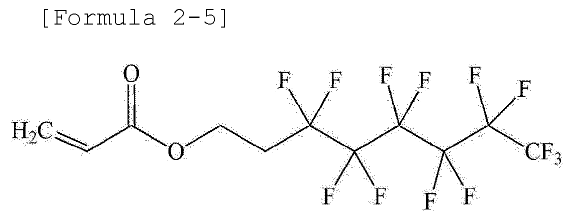

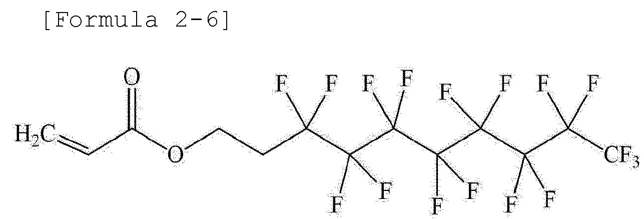

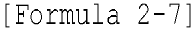

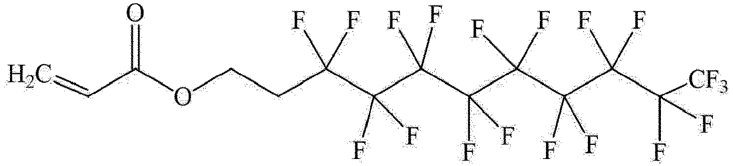

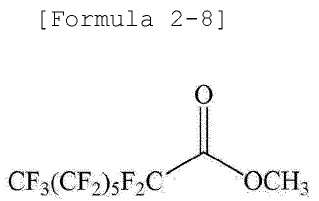

The compound represented by the Formula 2 may be included in an amount of 0.01 wt% to 45 wt%, particularly 0.01 wt% to 30 wt%, and preferably 0.1 wt% to 30 wt% based on the total weight of the precursor composition for preparing a polymer electrolyte. In a case in which the amount of the compound represented by the Formula 2 included is within the above range, the compound represented by the Formula 2 may further reduce the viscosity of the precursor composition for preparing a polymer electrolyte by improving the degree of agglomeration and the degree of crystallinity in the polymer when the oligomer forms a three-dimensional structured polymer network, and furthermore, the compound represented by the Formula 2 may prevent a decrease in safety of the battery by improving flame retardancy and oxidizing potential of the precursor composition by the fluorine element. Also, since a radical reaction rate during a polymer reaction may be improved, a polymer electrolyte with better mechanical properties may be formed.

The oligomer represented by the Formula 1 and the compound represented by the Formula 2 may be included in a weight ratio of 1:0.01 to 1:4.

If the oligomer represented by the Formula 1 and the compound represented by the Formula 2 are included within the above range, the flame retardancy and oxidizing potential of the precursor composition for preparing a polymer electrolyte may be improved, charge and discharge of the battery may be smoothly performed by dissociating lithium ions in the electrolyte to above a predetermined level, and the viscosity may be maintained at a level at which a moisture-retention property in the battery may be constantly maintained. Specifically, if the weight ratio of the compound represented by the Formula 2 to the oligomer represented by the Formula 1 is 4 or less, overall performance, for example, cell operation performance, such as resistance and output characteristics, of the battery may be improved by reducing an electrochemical interference reaction, and, if the weight ratio of the compound represented by the Formula 2 is 0.01 or more, the flame retardancy and oxidizing potential of the polymer electrolyte may be effectively improved.

As described above, in a case in which the weight ratio of the compound represented by the Formula 2 to the oligomer represented by the Formula 1 satisfies the above numerical range, the viscosity of the precursor composition for preparing a polymer electrolyte of the present invention may be improved, and a polymer electrolyte, in which excellent ionic conductivity and flame retardancy are secured, may be prepared.

Specifically, the oligomer represented by the Formula 1 and the compound represented by the Formula 2 may be included in a weight ratio of 1:0.1 to 1:4, for example, 1:1 to 1:4.

A compound containing two or more acrylate groups as a terminal group, for example, a compound represented by the following Formula 3, has a viscosity of the compound itself higher than that of a carbonate-based solvent, a general electrolyte solvent. Thus, in a case in which the compound represented by the following Formula 3 is included as a component of the precursor composition for preparing a polymer electrolyte of the present invention instead of the compound represented by the Formula 1, since the viscosity of the precursor composition for preparing a polymer electrolyte is increased to reduce the mobility of lithium ions and electrochemical performance of the polymer electrolyte is degraded as the impregnability is reduced, the cell operation performance may be relatively degraded.

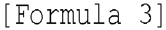

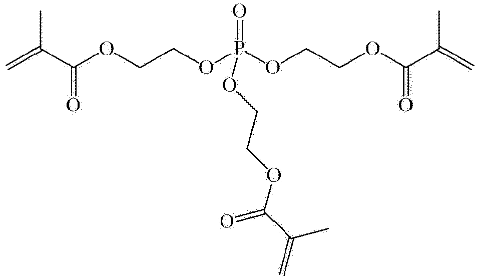

### (6) Other Additives

Also, the precursor composition for preparing a polymer electrolyte of the present invention may further include additional other additives in addition to the compound represented by the Formula 1, if necessary, in order to prevent the occurrence of collapse of a negative electrode due to decomposition of the non-aqueous organic solvent in a high power environment or to further improve low-temperature high rate discharge characteristics, high-temperature stability, overcharge prevention, and an effect of suppressing battery swelling at high temperature.

Examples of the other additives may be at least one selected from the group consisting of a halogen-unsubstituted or substituted carbonate-based compound, a sultone-based compound, a sulfate-based compound, a phosphate-based or phosphite-based compound, a borate-based compound, a nitrile-based compound, a benzene-based compound, an amine-based compound, a silane-based compound, and a lithium salt-based compound.

The halogen-unsubstituted or substituted carbonate-based compound, for example, may include vinylene carbonate (VC), vinylethylene carbonate, or fluoroethylene carbonate (FEC).

The sultone-based compound, for example, may be at least one compound selected from the group consisting of 1,3-propane sultone (PS), 1,4-butane sultone, ethane sultone, 1,3-propene sultone (PRS), 1,4-butene sultone, and 1-methyl-1,3-propene sultone.

The sulfate-based compound, for example, may be ethylene sulfate (Esa), trimethylene sulfate (TMS), or methyl trimethylene sulfate (MTMS).

The phosphate-based or phosphite-based compound, for example, may be at least one compound selected from the group consisting of lithium difluoro(bisoxalato)phosphate, lithium difluorophosphate, tris(trimethylsilyl)phosphite, tris(2,2,2-trifluoroethyl)phosphate, and tris(trifluoroethyl)phosphite.

The borate-based compound may be tetraphenylborate, lithium oxalyldifluoroborate (LiODFB), or lithium bisoxalatoborate (LiB(C₂O₄)₂; LiBOB).

The nitrile-based compound, for example, may be at least one compound selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may be fluorobenzene, the amine-based compound may be triethanolamine or ethylene diamine, and the silane-based compound may be tetravinylsilane.

The lithium salt-based compound is a compound different from the lithium salt included in the precursor composition for preparing a polymer electrolyte, wherein the lithium salt-based compound may include LiPO₂F₂ or LiBF₄.

In a case in which vinylene carbonate, vinylethylene carbonate, or succinonitrile, among these other additives, is included, a more robust solid electrolyte interphase (SEI) may be formed on a surface of the negative electrode during an initial activation process of the secondary battery.

In a case in which the LiBF₄ is included, high-temperature stability of the secondary battery may be improved by suppressing the generation of gas which may be generated due to decomposition of the electrolyte during high-temperature storage.

Two or more compounds may be mixed and used as the other additives, and the other additives may be included in an amount of 0.01 wt% to 50 wt%, particularly 0.05 wt% to 10 wt%, and preferably 0.1 wt% to 5 wt% based on the total weight of the precursor composition for preparing a polymer electrolyte. If the amount of the additional additives is less than 0.01 wt%, an effect of improving low-temperature output, high-temperature storage characteristics, and high-temperature life characteristics of the battery is insignificant, and, if the amount of the additional additives is greater than 50 wt%, a side reaction may excessively occur during charge and discharge of the battery due to the excessive amount of the additives. Particularly, when the excessive amount of the additives for forming an SEI is added, the additives may not be sufficiently decomposed at high temperature so that an unreacted material is formed in the electrolyte at room temperature or they may be present in the form of precipitates. Accordingly, a side reaction that degrades life or resistance characteristics of the secondary battery may occur.

### [Polymer Electrolyte]

Hereinafter, a polymer electrolyte according to the present invention will be described.

The polymer electrolyte of the present invention may be prepared by using the precursor composition for preparing a polymer electrolyte of the present invention.

A conventional polymer electrolyte has problems in that electrical conductivity is lower than that of a liquid electrolyte, and stability, such as flame retardancy, and mechanical properties are relatively poorer than those of a solid polymer electrolyte. However, the polymer electrolyte according to the present invention may achieve an effect of improving the electrical conductivity and mechanical properties by including the polymer network using the oligomer represented by the Formula 1 which includes the unit including a polycarbonate group as a main chain repeating unit, the unit B including an amide group, and the units A and A' including a (meth)acrylate group. Particularly, since the oligomer represented by the Formula 1 includes the polycarbonate group with properties similar to those of the non-aqueous organic solvent as a repeating unit, it may suppress the separation phenomenon due to the phase difference between the non-aqueous organic solvent and the oligomer and, accordingly, it allows lithium ions to be uniformly located in the electrolyte, and thus, the electrical conductivity of the polymer electrolyte may be improved.

Also, the polymer electrolyte according to the present invention may improve the oxidizing potential and flame retardancy by including the compound of Formula 2 containing the fluorine element as an additive. Particularly, since the compound represented by the Formula 2 may improve the polymerization reaction of the oligomer by helping the radical reaction of the polymer, it may improve the mechanical properties of the polymer electrolyte and may suppress a side reaction of the electrolyte by increasing an electrode protection effect of the polymer, and thus, an effect of improving life characteristics and durability of the secondary battery may be achieved.

Therefore, in a case in which the polymer electrolyte is included, if output characteristics are improved by improving the mobility of lithium ions and oxidation resistance is improved, a lithium secondary battery with improved overall performance, such as oxidation safety and high-temperature output characteristics, may be achieved.

The polymer electrolyte according to the present invention may be formed by polymerization of the precursor composition for preparing a polymer electrolyte according to a conventional method known in the art. Specifically, the polymer electrolyte may be formed by in-situ polymerization of the precursor composition for preparing a polymer electrolyte in a secondary battery to be described later.

More specifically, as will be described later, the polymer electrolyte may be prepared through steps of: (a) inserting an electrode assembly composed of a positive electrode, a negative electrode, and a separator disposed between the positive electrode and the negative electrode into a battery case and (b) injecting the precursor composition for preparing a polymer electrolyte according to the present invention into the battery case and performing polymerization to form a polymer electrolyte.

An in-situ polymerization reaction in the lithium secondary battery may be performed by using E-beam, γ-ray, and room temperature/high temperature aging processes, and according to an embodiment of the present invention, it may be performed by thermal polymerization. In this case, polymerization time required may be in a range of about 2 minutes to about 12 hours, and thermal polymerization temperature may be in a range of 30°C to 100°C.

More specifically, after the polymerization initiator, the oligomer represented by the Formula 1, and the compound represented by the Formula 2 are added in quantitative amounts to the non-aqueous solvent, in which the lithium salt is dissolved, and mixed and the mixture is then injected into a battery cell, the in-situ polymerization reaction in the lithium secondary battery may be performed by sealing an injection port of the battery cell and performing a polymerization reaction by heating the battery cell at 40°C to 80°C for 1 hour to 20 hours.

As another method, after the precursor composition for preparing a polymer electrolyte is coated on one surface of an electrode and a separator and is cured (gelated) by using heat or UV, an electrode assembly is prepared by winding or laminating the electrode and/or separator having a polymer electrolyte formed thereon, and a lithium secondary battery may be prepared by inserting the electrode assembly into a battery case and re-injecting a conventional liquid electrolyte thereinto.

### [Lithium Secondary Battery]

Next, a lithium secondary battery according to the present invention will be described.

The lithium secondary battery according to another embodiment of the present invention includes a positive electrode, a negative electrode, a separator disposed between the positive electrode and the negative electrode, and a polymer electrolyte, and, in this case, the polymer electrolyte is the polymer electrolyte according to the present invention. Since the polymer electrolyte has been described above, a description thereof will be omitted and other components will be described below.

### (1) Positive Electrode

The positive electrode according to the present invention may include a positive electrode active material layer including a positive electrode active material, and, if necessary, the positive electrode active material layer may further include a conductive agent and/or a binder.

The positive electrode active material is a compound capable of reversibly intercalating and deintercalating lithium, wherein the positive electrode active material may specifically include a lithium composite metal oxide including lithium and at least one metal selected from the group consisting of nickel (Ni), cobalt (Co), manganese (Mn), iron (Fe), and aluminum (Al), and may include a high-nickel (Ni) lithium composite metal oxide in which a Ni content is high at 0.55 or more.

Typical examples of the lithium composite metal oxide may be Li (Ni_{0.6}Mn_{0.2}Co_{0.2})O₂, Li(Ni_{0.7}Mn_{0.20}Co_{0.10})O₂, Li(Ni_{0.8}Mn_{0.1}Co_{0.1})O₂, Li[Ni_{0.8}Co_{0.15}Al_{0.05}]O₂, Li[Ni_{0.86}Mn_{0.07}Co_{0.05}Al_{0.02}]O₂, or Li(Ni_{0.9}Mn_{0.05}Co_{0.05})O₂.

Also, in addition to the above-described lithium composite metal oxide, the positive electrode active material may further include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{z}O₄ (where 0<Z<2)), lithium-nickel-cobalt-based oxide (e.g., LiNi_{1-Y1}Co_{Y1}O₂ (where 0<Y1<1)), lithium-manganese-cobalt-based oxide (e.g., LiCo_{1-Y2}Mn_{Y2}O₂ (where 0<Y2<1), LiMn_{2-Z1}Co_{z1}O₄ (where 0<Z1<2)), lithium-nickel-manganese-cobalt-based oxide (e.g., Li(NiₚCo_{q}Mnᵣ₁)O₂ (where 0<p<1, 0<q<1, 0<r1<1, and p+q+r1=1) or Li(Niₚ₁Co_{q1}Mnᵣ₂)O₄ (where 0<p1<2, 0<q1<2, 0<r2<2, and p1+q1+r2=2), or lithium-nickel-cobalt-transition metal (M) oxide (e.g., Li(Niₚ₂Co_{q2}Mnᵣ₃M_{S2})O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein 0<p2<1, 0<q2<1, 0<r3<1, 0<S2<1, and p2+q2+r3+S2=1), if necessary.

The positive electrode active material may be included in an amount of 80 wt% to 98 wt%, for example, 85 wt% to 98 wt% based on a total weight of the positive electrode active material layer. When the positive electrode active material is included in an amount within the above range, excellent capacity characteristics may be exhibited.

Next, the conductive agent is used to provide conductivity to the electrode, wherein any conductive agent may be used without particular limitation as long as it has suitable electron conductivity without causing adverse chemical changes in the battery.

As a specific example of the conductive agent, a conductive material, such as: carbon powder such as carbon black, acetylene black (or Denka black), Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent may be included in an amount of 0.1 wt% to 10 wt%, for example, 0.1 wt% to 5 wt% based on the total weight of the positive electrode active material layer.

Next, the binder improves the adhesion between positive electrode active material particles and the adhesion between the positive electrode active material and a current collector.

Specific examples of the binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder.

The binder may be included in an amount of 0.1 wt% to 15 wt%, for example, 0.1 wt% to 10 wt% based on the total weight of the positive electrode active material layer.

The positive electrode of the present invention as described above may be prepared by a method of preparing a positive electrode which is known in the art. For example, the positive electrode may be prepared by a method in which a positive electrode collector is coated with a positive electrode slurry, which is prepared by dissolving or dispersing the positive electrode active material, the binder, and/or the conductive agent in a solvent, dried, and then rolled, or a method in which the positive electrode slurry is cast on a separate support and a film separated from the support is then laminated on the positive electrode collector.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 µm, and microscopic irregularities may be formed on the surface of the collector to improve the adhesion of the positive electrode material. The positive electrode collector, for example, may be used in various shapes such as that of a film, a sheet, a foil, a net, a porous body, a foam body, a non-woven fabric body, and the like.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if a positive electrode material mixture may be adjusted to have appropriate viscosity in consideration of a coating thickness of the positive electrode material mixture, manufacturing yield, and workability, and is not particularly limited.

### (2) Negative Electrode

Next, a negative electrode will be described.

A lithium metal electrode, such as a lithium, copper, or nickel electrode, may be used as the negative electrode according to the present invention.

Also, as the negative electrode of the present invention, a negative electrode including various negative electrode active materials used in the art, for example, a negative electrode active material, such as a carbon-based negative electrode active material, a silicon-based negative electrode active material, or a mixture thereof, may be used.

The negative electrode active material may include a carbon-based negative electrode active material, and, as the carbon-based negative electrode active material, various carbon-based negative electrode active materials used in the art, for example, a graphite-based materials such as natural graphite, artificial graphite, and Kish graphite; pyrolytic carbon, mesophase pitch based carbon fiber, meso-carbon microbeads, mesophase pitches, high-temperature sintered carbon such as petroleum or coal tar pitch derived cokes, soft carbon, and hard carbon may be used. A shape of the carbon-based negative electrode active material is not particularly limited, and materials of various shapes, such as an irregular shape, planar shape, flaky shape, spherical shape, or fibrous shape, may be used.

Preferably, the carbon-based negative electrode active material may include at least one of natural graphite and artificial graphite. More preferably, the carbon-based negative electrode active material may include natural graphite and artificial graphite. In a case in which the natural graphite and the artificial graphite are used together, adhesion with the current collector may be increased to suppress exfoliation of the active material.

According to another embodiment, the negative electrode active material may include a carbon-based negative electrode active material and a silicon-based negative electrode active material.

Specific examples of the carbon-based negative electrode active material are the same as described above.

The silicon-based negative electrode active material, for example, may include at least one selected from the group consisting of metallic silicon (Si), silicon oxide (SiOₓ, where 0<x<2), silicon carbide (SiC), and a Si-Y alloy (where Y is an element selected from the group consisting of alkali metal, alkaline earth metal, a Group 13 element, a Group 14 element, transition metal, a rare earth element, and a combination thereof, and is not Si). The element Y may be selected from the group consisting of Mg, calcium (Ca), strontium (Sr), barium (Ba), radium (Ra), scandium (Sc), yttrium (Y), Ti, zirconium (Zr), hafnium (Hf), rutherfordium (Rf), V, niobium (Nb), Ta, dubnium (Db), Cr, Mo, tungsten (W), seaborgium (Sg), technetium (Tc), rhenium (Re), bohrium (Bh), Fe, lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), Al, gallium (Ga), tin (Sn), indium (In), germanium (Ge), phosphorus (P), arsenic (As), antimony (Sb), bismuth (Bi), sulfur (S), selenium (Se), tellurium (Te), polonium (Po), and a combination thereof.

Since the silicon-based negative electrode active material has higher capacity characteristics than the carbon-based negative electrode active material, better capacity characteristics may be obtained when the silicon-based negative electrode active material is further included.

A mixing ratio of the silicon-based negative electrode active material : the carbon-based negative electrode active material may be in a range of 3:97 to 99:1, for example, 5:95 to 15:85, as a weight ratio. In a case in which the mixing ratio of the silicon-based negative electrode active material to the carbon-based negative electrode active material satisfies the above range, since a volume expansion of the silicon-based negative electrode active material is suppressed while capacity characteristics are improved, excellent cycle performance may be secured.

The negative electrode active material may be included in an amount of 80 wt% to 99 wt% based on a total weight of the negative electrode active material layer. In a case in which the amount of the negative electrode active material satisfies the above range, excellent capacity characteristics and electrochemical properties may be obtained.

The negative electrode active material layer may further include a conductive agent and/or a binder, if necessary.

The conductive agent is a component for further improving conductivity of the negative electrode active material, wherein any conductive agent may be used without particular limitation so long as it has conductivity without causing adverse chemical changes in the battery, and the conductive agent may be the same as or different from that used during the preparation of the positive electrode. Specifically, a conductive material, such as: carbon powder such as carbon black, acetylene black (or Denka black), Ketjen black, channel black, furnace black, lamp black, or thermal black; graphite powder such as natural graphite with a well-developed crystal structure, artificial graphite, or graphite; conductive fibers such as carbon fibers or metal fibers; conductive powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used as the conductive agent.

The conductive agent may be added in an amount of 10 wt% or less, for example, 5 wt% or less based on the total weight of the negative electrode active material layer.

The binder is a component that assists in the binding between the conductive agent, the active material, and the current collector, wherein the binder may be the same as or different from that used during the preparation of the positive electrode. Specifically, the binder may include a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder.

The binder may be added in an amount of 0.1 wt% to 20 wt% based on the total weight of the negative electrode active material layer.

The negative electrode may be prepared by a method of preparing a negative electrode which is known in the art. For example, the negative electrode may be prepared by a method in which a negative electrode collector is coated with a negative electrode slurry, which is prepared by dissolving or dispersing the negative electrode active material as well as optionally the binder and the conductive agent in a solvent, rolled and dried, or may be prepared by casting the negative electrode slurry on a separate support and then laminating a film separated from the support on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, or an aluminum-cadmium alloy may be used. Also, the negative electrode collector may typically have a thickness of 3 um to 500 µm, and, similar to the positive electrode collector, microscopic irregularities may be formed on the surface of the collector to improve the adhesion of the negative electrode active material. The negative electrode collector, for example, may be used in various shapes such as that of a film, a sheet, a foil, a net, a porous body, a foam body, a non-woven fabric body, and the like.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the negative electrode slurry may be adjusted to have appropriate viscosity in consideration of a coating thickness of a negative electrode material mixture, manufacturing yield, and workability, and is not particularly limited.

### (3) Separator

The lithium secondary battery according to the present invention includes a separator between the positive electrode and the negative electrode.

The separator separates the negative electrode and the positive electrode and provides a movement path of lithium ions, wherein any separator may be used without particular limitation as long as it is typically used as a separator in a lithium secondary battery, and particularly, a separator having high moisture-retention ability for an electrolyte solution as well as low resistance to the transfer of electrolyte ions may be used.

Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

The lithium secondary battery according to the present invention as described above may be suitably used in portable devices, such as mobile phones, notebook computers, and digital cameras, and electric cars such as a hybrid electric vehicle (HEV) .

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle (HEV), and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, the present invention will be described in detail, according to specific examples. However, the following examples are merely presented to exemplify the present invention, and the scope of the present invention is not limited thereto. It will be apparent to those skilled in the art that various modifications and alterations are possible within the scope and technical spirit of the present invention. Such modifications and alterations fall within the scope of claims included herein.

### [Examples]

### Example 1.

### (Preparation of Precursor Composition for Preparing Polymer Electrolyte)

After 5 g of the oligomer represented by the Formula 1A-2 (n2 and m2 were 10, k2 was 2, and a weight-average molecular weight (Mw) was 3,000 g/mol), 0.05 g of the compound of Formula 2-3, and 0.2 g of a polymerization initiator (2,2'-azobis(iso-butyronitrile), AIBN) were added to 94.75 g of a non-aqueous organic solvent in which ethylene carbonate (EC), propylene carbonate (PC), ethyl propionate (EP), and propyl propionate (PP) were mixed in a volume ratio of 20:10:20:50, LiPF₆ was dissolved such that a concentration of the LiPF₆ was 1 M to prepare a precursor composition for preparing a polymer electrolyte (see Table 1 below).

### (Secondary Battery Preparation)

96 parts by weight of LiCoO₂ as a positive electrode active material, 2 parts by weight of carbon black as a conductive agent, and 2 parts by weight of polyvinylidene fluoride (PVDF), as a binder, were added to N-methyl-2-pyrrolidone (NMP), as a solvent, to prepare a positive electrode mixture slurry. An about 20 um thick aluminum (Al) thin film, as a positive electrode collector, was coated with the positive electrode mixture slurry, dried, and then roll-pressed to prepare a positive electrode.

Graphite as a negative electrode active material, a styrene butadiene rubber (SBR) as a binder, CMC as a thickener, and carbon black, as a conductive agent, were mixed in a weight ratio of 96.3:1:1.5:1.2 and then added to NMP, as a solvent, to prepare a negative electrode mixture slurry. A 10 um thick copper (Cu) thin film, as a negative electrode collector, was coated with the negative electrode mixture slurry, dried, and then roll-pressed to prepare a negative electrode.

A battery was assembled by using the positive electrode, the negative electrode, and a separator formed of three layers of polypropylene/polyethylene/polypropylene (PP/PE/PP), and, after 5 mℓ of the above-prepared precursor composition for preparing a polymer electrolyte was injected into the assembled battery, the assembled battery was left standing for 2 days and then heated at 70°C for 5 hours to prepare a lithium secondary battery including a polymer electrolyte.

### Example 2.

After 5 g of the oligomer represented by the Formula 1A-2 (n2 and m2 were 10, k2 was 2, and a weight-average molecular weight (Mw) was 3,000 g/mol), 20 g of the compound of Formula 2-3, and 0.2 g of a polymerization initiator (AIBN) were added to 74.80 g of a non-aqueous organic solvent, LiPF₆ was dissolved such that a concentration of the LiPF₆ was 1 M to prepare a precursor composition for preparing a polymer electrolyte (see Table 1 below).

A lithium secondary battery was prepared in the same manner as in Example 1 except that the above-prepared precursor composition for preparing a polymer electrolyte was used.

### Example 3.

After 0.5 g of the oligomer represented by the Formula 1A-2 (n2 and m2 were 10, k2 was 2, and a weight-average molecular weight (Mw) was 3,000 g/mol), 0.5 g of the compound of Formula 2-3, and 0.02 g of a polymerization initiator (AIBN) were added to 98.98 g of a non-aqueous organic solvent, LiPF₆ was dissolved such that a concentration of the LiPF₆ was 1 M to prepare a precursor composition for preparing a polymer electrolyte (see Table 1 below).

A lithium secondary battery was prepared in the same manner as in Example 1 except that the above-prepared precursor composition for preparing a polymer electrolyte was used.

### Example 4.

After 30 g of the oligomer represented by the Formula 1A-2 (n2 and m2 were 10, k2 was 2, and a weight-average molecular weight (Mw) was 3,000 g/mol), 0.5 g of the compound of Formula 2-4, and 2.0 g of a polymerization initiator (AIBN) were added to 67.50 g of a non-aqueous organic solvent, LiPF₆ was dissolved such that a concentration of the LiPF₆ was 1 M to prepare a precursor composition for preparing a polymer electrolyte (see Table 1 below).

A lithium secondary battery was prepared in the same manner as in Example 1 except that the above-prepared precursor composition for preparing a polymer electrolyte was used.

### Example 5.

After 5 g of the oligomer represented by the Formula 1A-2 (n2 and m2 were 10, k2 was 2, and a weight-average molecular weight (Mw) was 3,000 g/mol), 0.05 g of the compound of Formula 2-7, and 0.2 g of a polymerization initiator (AIBN) were added to 94.75 g of a non-aqueous organic solvent, LiPF₆ was dissolved such that a concentration of the LiPF₆ was 1 M to prepare a precursor composition for preparing a polymer electrolyte (see Table 1 below).

A lithium secondary battery was prepared in the same manner as in Example 1 except that the above-prepared precursor composition for preparing a polymer electrolyte was used.

### Example 6.

After 40 g of the oligomer represented by the Formula 1A-2 (n2 and m2 were 10, k2 was 2, and a weight-average molecular weight (Mw) was 3,000 g/mol), 0.5 g of the compound of Formula 2-7, and 2.5 g of a polymerization initiator (AIBN) were added to 57 g of a non-aqueous organic solvent, LiPF₆ was dissolved such that a concentration of the LiPF₆ was 1 M to prepare a precursor composition for preparing a polymer electrolyte (see Table 1 below).

Subsequently, an attempt was made to prepare a lithium secondary battery in the same manner as in Example 1 except that the above-prepared precursor composition for preparing a polymer electrolyte was used, but, since it was difficult to prepare a uniform polymer electrolyte while a rather large amount of the oligomer contained was not uniformly dissolved in the non-aqueous organic solvent, cell operation was not possible.

### Comparative Example 1.

LiPF₆ was dissolved in 100 g of a non-aqueous organic solvent, in which ethylene carbonate (EC), propylene carbonate (PC), ethyl propionate (EP), and propyl propionate (PP) were mixed in a volume ratio of 20:10:20:50, such that a concentration of the LiPF₆ was 1 M to prepare a non-aqueous electrolyte solution. Then, a lithium secondary battery was prepared in the same manner as in Example 1 except that the above non-aqueous electrolyte solution was used. (see Table 1 below).

### Comparative Example 2.

After 5 g of the oligomer represented by the Formula 1A-2 (n2 and m2 were 10, k2 was 2, and a weight-average molecular weight (Mw) was 3,000 g/mol) and 0.2 g of a polymerization initiator (AIBN) were added to 94.80 g of a non-aqueous organic solvent, LiPF₆ was dissolved such that a concentration of the LiPF₆ was 1 M to prepare a precursor composition for preparing a polymer electrolyte (see Table 1 below).

A lithium secondary battery was prepared in the same manner as in Example 1 except that the above-prepared precursor composition for preparing a polymer electrolyte was used.

### Comparative Example 3.

After 24 g of the oligomer represented by the Formula 1A-2 (n2 and m2 were 10, k2 was 2, and a weight-average molecular weight (Mw) was 3,000 g/mol) and 1.5 g of a polymerization initiator (AIBN) were added to 74.50 g of a non-aqueous organic solvent, LiPF₆ was dissolved such that a concentration of the LiPF₆ was 1 M to prepare a precursor composition for preparing a polymer electrolyte (see Table 1 below) .

A lithium secondary battery was prepared in the same manner as in Example 1 except that the above-prepared precursor composition for preparing a polymer electrolyte was used.

### Comparative Example 4.

After 50 g of the compound of Formula 2-7 was added to 50.0 g of a non-aqueous organic solvent, LiPF₆ was dissolved such that a concentration of the LiPF₆ was 1 M to prepare a precursor composition for preparing a polymer electrolyte (see Table 1 below).

A lithium secondary battery was prepared in the same manner as in Example 1 except that the above-prepared precursor composition for preparing a polymer electrolyte was used.

### Comparative Example 5.

After 5 g of the oligomer represented by the Formula 1A-2 (n2 and m2 were 10, k2 was 2, and a weight-average molecular weight (Mw) was 3,000 g/mol), 50 g of the compound of Formula 2-7, and 0.2 g of a polymerization initiator (AIBN) were added to 44.8 g of a non-aqueous organic solvent, LiPF₆ was dissolved such that a concentration of the LiPF₆ was 1 M to prepare a precursor composition for preparing a polymer electrolyte (see Table 1 below).

A lithium secondary battery was prepared in the same manner as in Example 1 except that the above-prepared precursor composition for preparing a polymer electrolyte was used.

### Comparative Example 6.

A lithium secondary battery was prepared in the same manner as in Example 1 except that a precursor composition for preparing a polymer electrolyte was prepared by using a phosphate acrylate compound of the following Formula 3, instead of the oligomer of Formula 1, as an oligomer.

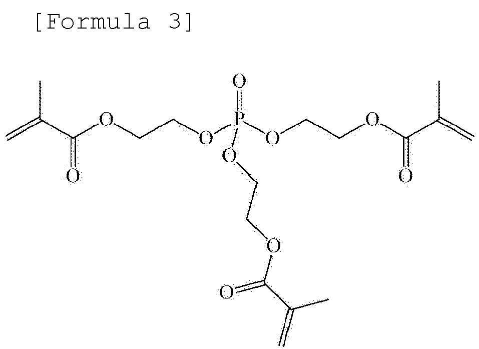

### Comparative Example 7.

A lithium secondary battery was prepared in the same manner as in Example 1 except that, after LiPF₆ was dissolved in 94.775 g of a non-aqueous organic solvent such that a concentration of the LiPF₆ was 1 M, a precursor composition for preparing a polymer electrolyte was prepared by adding 5.0 g of the oligomer represented by the Formula 1A-2 (n2 and m2 were 10, k2 was 2, and a weight-average molecular weight (Mw) was 3,000 g/mol), 0.025 g of the compound of Formula 2-3, and 0.2 g of a polymerization initiator (AIBN).

### Comparative Example 8.

A lithium secondary battery was prepared in the same manner as in Example 1 except that, after 0.5 g of the oligomer represented by the Formula 1A-2 (n2 and m2 were 10, k2 was 2, and a weight-average molecular weight (Mw) was 3,000 g/mol), 2.5 g of the compound of Formula 2-3, and 0.02 g of a polymerization initiator (AIBN) were added to 96.88 g of a non-aqueous organic solvent, LiPF₆ was dissolved such that a concentration of the LiPF₆ was 1 M to prepare a precursor composition for preparing a polymer electrolyte.

**[Table 1]**

| | Non-aqueous organic solvent | | Oligomer of Formula 1 | | Compound of Formula 2 | | Polymeri zation initiate r |
|---|---|---|---|---|---|---|---|
| | Compositi on | Amount (g) | Formula | Amount (g) | Formula | Amount (g) | Amount (g) |
| Example 1 | 1 M LiPF₆ EC:PC:EP: PP = 20:10:20: 50 volume ratio | 94.75 | 1A-2 | 5.0 | 2-3 | 0.05 | 0.2 |
| Example 2 | | 74.80 | 1A-2 | 5.0 | 2-3 | 20 | 0.2 |
| Example 3 | | 98.98 | 1A-2 | 0.5 | 2-3 | 0.5 | 0.02 |
| Example 4 | | 67.50 | 1A-2 | 30 | 2-4 | 0.5 | 2.0 |
| Example 5 | | 94.75 | 1A-2 | 5.0 | 2-7 | 0.05 | 0.2 |
| Example 6 | | 57.0 | 1A-2 | 40 | 2-3 | 0.5 | 2.5 |
| Comparative Example 1 | | 100 | - | - | - | - | - |
| Comparative Example 2 | | 94.80 | 1A-2 | 5.0 | - | - | 0.2 |
| Comparative Example 3 | | 74.50 | 1A-2 | 24 | - | - | 1.5 |
| Comparative Example 4 | | 50.0 | - | - | 2-7 | 50 | - |
| Comparative Example 5 | | 44.80 | 1A-2 | 5.0 | 2-7 | 50 | 0.2 |
| Comparative Example 6 | | 94.75 | 3 | 5.0 | 2-3 | 0.05 | 0.2 |
| Comparative Example 7 | | 94.775 | 1A-2 | 5.0 | 2-3 | 0.025 | 0.2 |
| Comparative Example 8 | | 96.98 | 1A-2 | 0.5 | 2-3 | 2.5 | 0.02 |

### [Experimental Examples]

### Experimental Example 1. Viscosity Evaluation

A rheometer (Brookfield Rheometer DV-III) was used to measure viscosities of the precursor compositions for preparing a polymer electrolyte, which were prepared in Examples 1 to 3 and 5, and the precursor compositions for preparing a polymer electrolyte which were prepared in Comparative Examples 1 to 3, 6, and 7, and the measurement results thereof are illustrated in Table 2 below.

**[Table 2]**

| | Viscosity (25°C/cPs) |
|---|---|
| Example 1 | 4.8 |
| Example 2 | 3.8 |
| Example 3 | 3.5 |
| Example 5 | 4.6 |
| Comparative Example 1 | 3.5 |
| Comparative Example 2 | 5.2 |
| Comparative Example 3 | 10 < |
| Comparative Example 6 | 5.1 |
| Comparative Example 7 | 5.0 |

Referring to Table 2, with respect to viscosities of the precursor compositions for preparing a polymer electrolyte of Examples 1 to 3 and 5 of the present invention, it may be understood that the viscosities were lower than viscosities of the precursor compositions for preparing a polymer electrolyte of Comparative Examples 2 and 3 including only the oligomer of Formula 1 alone, the precursor composition for preparing a polymer electrolyte of Comparative Example 6 including the oligomer of Formula 3, or the precursor composition for preparing a polymer electrolyte of Comparative Example 7 including a somewhat less amount of the oligomer of Formula 2.

It may be understood that viscosities of the precursor composition for preparing a polymer electrolyte of Example 2 with a high amount of the compound of Formula 2 and the precursor composition for preparing a polymer electrolyte of Example 3 with a low amount of the oligomer of Formula 1 were similar to that of the non-aqueous electrolyte solution of Comparative Example 1 which was in a state of liquid electrolyte solution.

### Experimental Example 2. Stability Evaluation

Each of the secondary batteries prepared in Examples 1 to 5 and the secondary batteries prepared in Comparative Examples 1 to 8 was fully charged to a state of charge (SOC) of 100% at 4.45 V, and then stored in a chamber at 85°C (heating rate: 5°C/1 min) for 8 hours to check a thickness increase rate (%) after high-temperature storage, and the results thereof are illustrated in Table 3 below.

**[Table 3]**

| | Thickness increase rate after high-temperature (85°C) storage (%) |
|---|---|
| Example 1 | 3.0 |
| Example 2 | 4.2 |
| Example 3 | 4.5 |
| Example 4 | 5.0 |
| Example 5 | 3.2 |
| Comparative Example 1 | 7.8 |
| Comparative Example 2 | 10.0 |
| Comparative Example 3 | 15.1 |
| Comparative Example 4 | Cell operation was not possible |
| Comparative Example 5 | Cell operation was not possible |
| Comparative Example 6 | 9.8 |
| Comparative Example 7 | 6.5 |
| Comparative Example 8 | 12.3 |

Referring to Table 3, it may be understood that the secondary batteries of Examples 1 to 5 of the present invention had a low thickness increase rate after high-temperature storage at 5.0% or less.

In contrast, with respect to the secondary battery of Comparative Example 1 not containing the oligomer, a thickness increase rate after high-temperature storage was 7.8% as a large amount of gas was generated, wherein it may be understood that the thickness increase rate after high-temperature storage was increased in comparison to those of the secondary batteries of Examples 1 to 5 of the present invention.

Also, with respect to the secondary batteries of Comparative Examples 2 and 3 including the precursor compositions for preparing a polymer electrolyte which contained only the oligomer represented by the Formula 1, the secondary battery of Comparative Example 6 including the precursor composition for preparing a polymer electrolyte which contained the compound represented by the Formula 3, the secondary battery of Comparative Example 7 containing a somewhat less amount of the compound represented by the Formula 2, and the secondary battery of Comparative Example 8 containing a somewhat large amount of the compound represented by the Formula 2, it may be understood that thickness increase rates after high-temperature storage were significantly increased in comparison to those of the secondary batteries of Examples 1 to 5 of the present invention.

With respect to the secondary battery of Comparative Example 4 using the precursor composition for preparing a polymer electrolyte which contained only the compound of Formula 2 or the secondary battery of Comparative Example 5 containing an excessive amount of the compound of Formula 2, it may be understood that a polymer electrolyte was not prepared, and cell operation was not possible because an electrochemical reaction of monomer occurred excessively.

### Experimental Example 3. Discharge Capacity Evaluation

Each of the secondary batteries prepared in Examples 1 to 5 and the secondary batteries prepared in Comparative Examples 2, 3, and 6 to 8 was charged at 0.7 C to 4.45 V, and discharged at 0.2 C rate to 3 V to perform initial discharge. Subsequently, after the above charging and discharging were defined as one cycle and the cycle was repeated three times, third discharge efficiency was measured, and the results thereof are illustrated in Table 4 below.

**[Table 4]**

| | Discharge capacity (Ah) |
|---|---|
| Example 1 | 2.95 |
| Example 2 | 3.01 |
| Example 3 | 3.02 |
| Example 4 | 2.93 |
| Example 5 | 3.00 |
| Comparative Example 2 | 2.88 |
| Comparative Example 3 | 2.55 |
| Comparative Example 6 | 2.89 |
| Comparative Example 7 | 2.91 |
| Comparative Example 8 | 2.84 |

Referring to Table 4, it may be understood that initial discharge capacities of the secondary batteries of Examples 1 to 5 of the present invention were about 2.93 or more, wherein the initial discharge capacities were increased in comparison to those of the secondary batteries of Comparative Examples 2, 3, and 6 to 8.

### Experimental Example 4. Capacity Retention Evaluation

The lithium secondary batteries prepared in Examples 1 to 5 and Comparative Examples 1 to 3 and 6 to 8 were charged/discharged at a temperature of 45°C under the following conditions.

### Charging conditions: 1.2 C CC (constant current)/CV (constant voltage), (4.25 V, 0.05 C current cut-off)

### Discharging conditions: 0.5 C CC 3 V cut-off

One cycle was defined on the basis of performing charge/discharge once, and, after 200 cycles, a capacity retention relative to capacity in an initial state (1 cycle) was measured and listed in Table 5 below.

**[Table 5]**

| | Capacity retention based on 200^{th} cycle (%) |
|---|---|
| Example 1 | 95 |
| Example 2 | 95 |
| Example 3 | 94 |
| Example 4 | 96 |
| Example 5 | 98 |
| Comparative Example 1 | 90 |
| Comparative Example 2 | 91 |
| Comparative Example 3 | > 50 |
| Comparative Example 6 | 88 |
| Comparative Example 7 | 91 |
| Comparative Example 8 | 85 |

Referring to Table 5, it may be understood that capacity retentions (%) based on 200^{th} cycle of the secondary batteries of Examples 1 to 5 of the present invention were about 94% or more, wherein the capacity retentions were increased in comparison to those of the secondary batteries of Comparative Examples 1 to 3 and 6 to 8.

## Claims

1. A precursor composition for preparing a polymer electrolyte, the precursor composition comprising:
a lithium salt, a non-aqueous organic solvent, a polymerization initiator,
an oligomer represented by the Formula 1, and
a compound represented by the Formula 2,
wherein the oligomer represented by the Formula 1 and the compound represented by the Formula 2 are included in a weight ratio of 1:0.01 to 1:4: 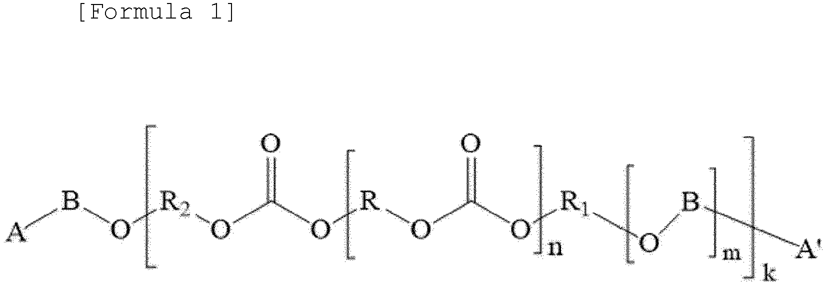
wherein, in the Formula 1,
R, R₁, and R₂ are each independently an alkylene group having 1 to 5 carbon atoms,
A and A' are each independently a unit containing one or more (meth)acrylate groups,
B is a unit containing at least one amide group, and
n, m, and k are numbers of repeating units,
wherein n is an integer of 1 to 10,000,
m is an integer of 1 to 1,000, and
k is an integer of 1 to 100. 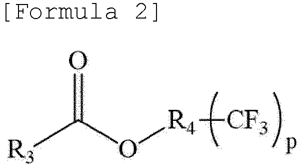
wherein, in the Formula 2,
R₃ is -CR₅=CH₂ (wherein, R₅ is hydrogen or an alkyl group having 1 to 3 carbon atoms) or -R₆-CF₃ (wherein, R₆ is an alkylene group having 1 to 20 carbon atoms which is substituted with at least one fluorine element),
R₄ is an alkylene group having 1 to 20 carbon atoms which is unsubstituted or substituted with at least one fluorine,
p is an integer of 0 or 1, and
when R₃ is -R₆-CF₃, p is 0, and R₄ is an alkyl group having 1 to 20 carbon atoms which is unsubstituted with fluorine.

2. The precursor composition for preparing a polymer electrolyte of claim 1, wherein, in the Formula 1, the units A and A' are each independently at least one selected from units represented by the Formulae A-1 to A-6:

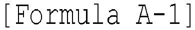

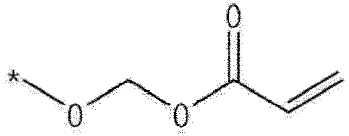

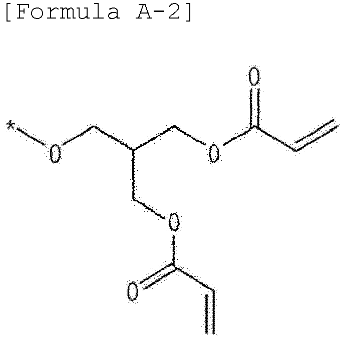

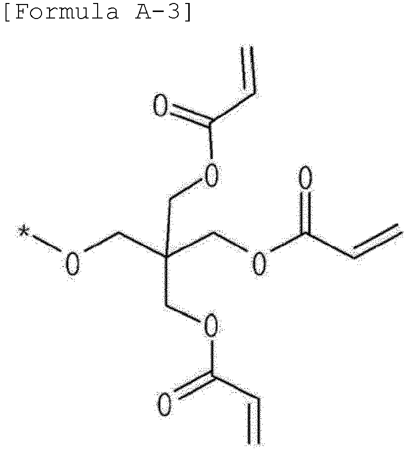

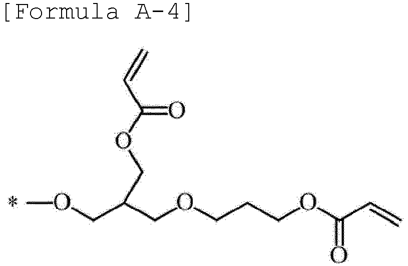

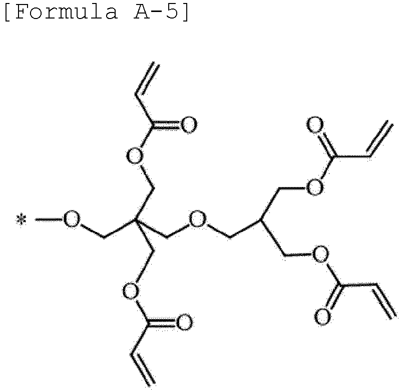

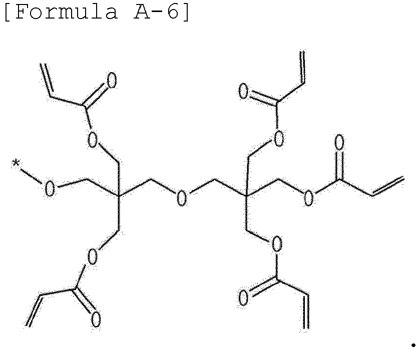

3. The precursor composition for preparing a polymer electrolyte of claim 1, wherein the unit B comprises a unit represented by the Formula B-1: 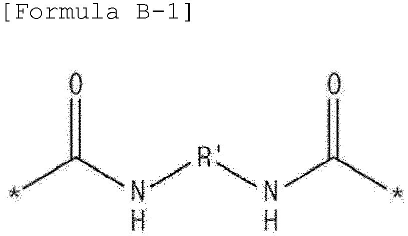 wherein, in the Formula B-1,
R' is an unsubstituted or substituted alkylene group having 1 to 10 carbon atoms, an unsubstituted or substituted cycloalkylene group having 3 to 10 carbon atoms, an unsubstituted or substituted bicycloalkylene group having 6 to 20 carbon atoms, or an unsubstituted or substituted arylene group having 6 to 20 carbon atoms.

4. The precursor composition for preparing a polymer electrolyte of claim 3, wherein R' is at least one selected from units represented by the Formulae R'-1 to R'-6:

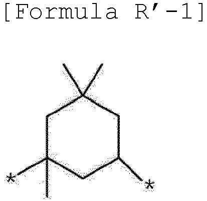

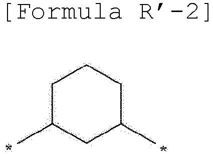

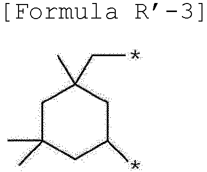

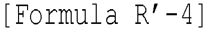

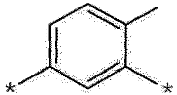

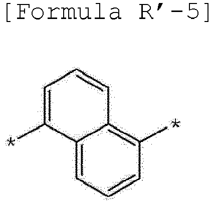

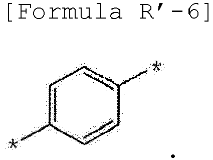

5. The precursor composition for preparing a polymer electrolyte of claim 1, wherein the oligomer represented by the Formula 1 is a compound represented by the Formula 1A: 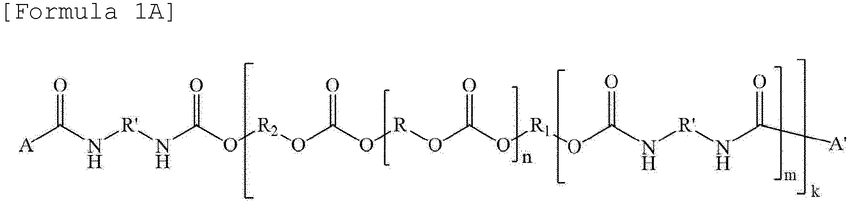 wherein, in the Formula 1A,
R, R₁, and R₂ are each independently an alkylene group having 1 to 5 carbon atoms,
R' is an unsubstituted or substituted alkylene group having 1 to 10 carbon atoms, an unsubstituted or substituted cycloalkylene group having 3 to 10 carbon atoms, an unsubstituted or substituted bicycloalkylene group having 6 to 20 carbon atoms, or an unsubstituted or substituted arylene group having 6 to 20 carbon atoms,
A and A' are each independently a unit containing one or more (meth)acrylate groups, and
n, m, and k are the numbers of repeating units,
wherein n is an integer of 1 to 10,000,
m is an integer of 1 to 1,000, and
k is an integer of 1 to 100.

6. The precursor composition for preparing a polymer electrolyte of claim 1, wherein the oligomer represented by the Formula 1 is a compound represented by the Formula 1A-1: 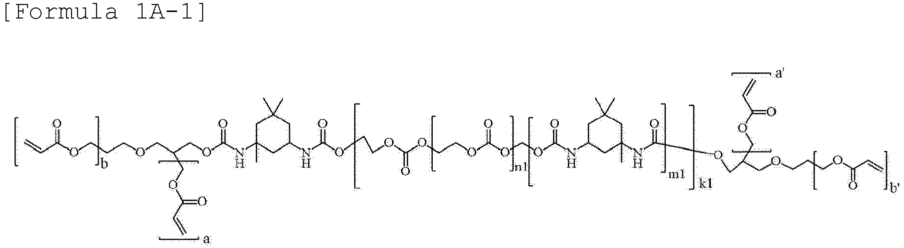
wherein, in the Formula 1A-1,
n1, m1, and k1 are the numbers of repeating units,
wherein n1 is an integer of 1 to 10,000,
m1 is an integer of 1 to 1,000, and
k1 is an integer of 1 to 100,
a and a' are each independently an integer of 1 or 2, and
b and b' are each independently an integer of 1 to 3.

7. The precursor composition for preparing a polymer electrolyte of claim 1, wherein the oligomer represented by the Formula 1 is included in an amount of 0.1 wt% to 30 wt% based on a total weight of the precursor composition for preparing a polymer electrolyte.

8. The precursor composition for preparing a polymer electrolyte of claim 1, wherein, in the Formula 2, R₃ is-CR₅=CH₂ (wherein, R₅ is hydrogen or an alkyl group having 1 to 3 carbon atoms) or -R₆-CF₃ (wherein, R₆ is an alkylene group having 1 to 10 carbon atoms which is substituted with at least one fluorine element), R₄ is an alkylene group having 1 to 10 carbon atoms which is unsubstituted or substituted with at least one fluorine, p is an integer of 0 or 1, and, when R₃ is -R₆-CF₃, p is 0, and R₄ is an alkyl group having 1 to 10 carbon atoms which is unsubstituted with fluorine.

9. The precursor composition for preparing a polymer electrolyte of claim 1, wherein the compound represented by the Formula 2 is at least one compound selected from the group consisting of compounds represented by the Formulae 2-1 to 2-8 :

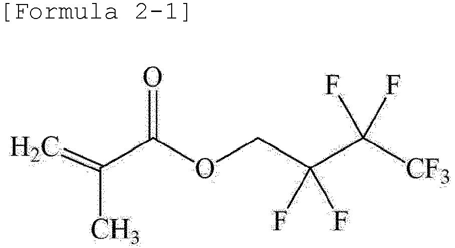

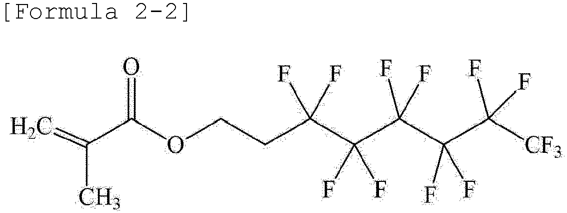

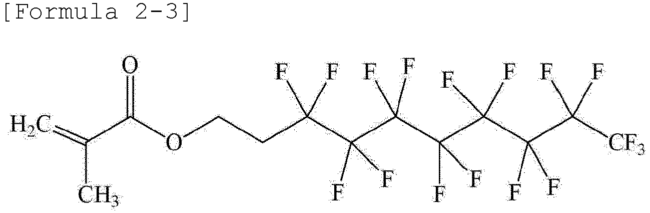

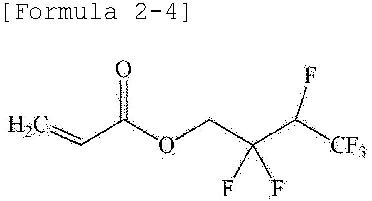

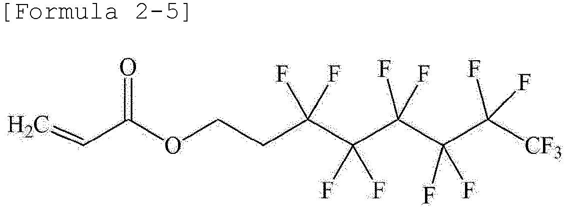

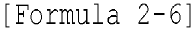

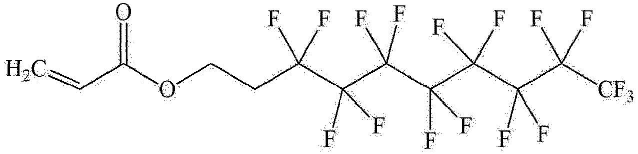

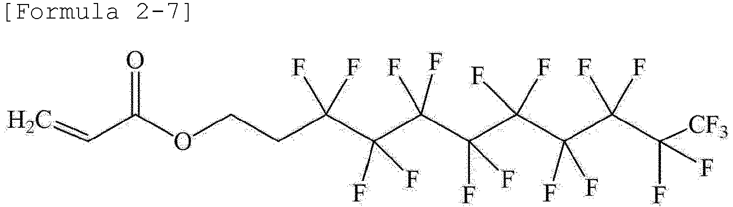

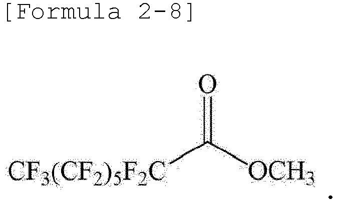

10. The precursor composition for preparing a polymer electrolyte of claim 1, wherein the compound represented by the Formula 2 is included in an amount of 0.01 wt% to 40 wt% based on a total weight of the precursor composition for preparing a polymer electrolyte.

11. A polymer electrolyte prepared by using the precursor composition for preparing a polymer electrolyte of claim 1.

12. A lithium secondary battery comprising a positive electrode; a negative electrode; a separator disposed between the positive electrode and the negative electrode; and the polymer electrolyte of claim 11.
